# EUROPÄISCHE PATENTANMELDUNG

(11) **EP 3 812 678 A1**
(43) Veröffentlichungstag der Anmeldung: **28.04.2021**
(21) Anmeldenummer: 20000380.4
(22) Anmeldetag: 20.10.2020
(51) Int. Cl.: F28D 1/047, F28D 20/00, F24D 3/08, F24H 1/18, F24H 1/20, F24H 9/00

(54) **WÄRMESPEICHER**

(30) Priorität: 21.10.2019 AT 3402019
(71) Anmelder: Kasper, Johann, 4973 St. Martin im Innkreis (AT); Standfest, Christoph Franz, 4849 Puchkirchen (AT)
(72) Erfinder: Kasper, Johann, 4973 St. Martin im Innkreis (AT); Standfest, Christoph Franz, 4849 Puchkirchen (AT)

(57) **Zusammenfassung**

Die Erfindung betrifft einen Wärmespeicher mit einen Behälter (1), welcher mit Heizwasser (2) gefüllt ist, wobei im Inneren des Behälters (1) ein zum Behälterinnenraum nach oben und nach unten hin offenes, im Wesentlichen vertikal ausgerichtetes Leitrohr (4) angeordnet ist, in dessen Innenraum eine Rohrwendel (5) verläuft, welche das zu erwärmende Brauchwasser führt und wobei eine elektrische Heizpatrone (6) mit ihrer beheizbaren Oberfläche (8) in das Innere des Leitrohres (4) ragt. Die elektrische Heizpatrone (6) erstreckt sich durch eine Öffnung in der Mantelfläche des Behälters (1) und durch eine Öffnung in der Mantelfläche des Leitrohres (4) hindurch, wobei diese Öffnungen vom oberen und vom unteren Rand der jeweiligen Mantelfläche beabstandet sind.

## Beschreibung

Die Erfindung betrifft einen Wärmespeicher, dessen wesentlichster Bestandteil ein Behälter ist, welcher ein Heizwasservolumen, ein Leitrohr, eine Rohrwendel für zu erwärmendes Brauchwasser und eine elektrische Heizpatrone umfasst.

Beispielsweise die Schriften DE 4301723 A1, DE 8703576 U1 und AT 511389 B1 zeigen jeweils Wärmespeicher, bei denen ein Behälter, dessen größere Abmessung vertikal ausgerichtet ist, in seinem Inneren ein oben und unten offenes sogenanntes Leitrohr (manchmal auch "Zentralrohr" genannt) umfasst, an dessen Mantelfläche eine oder mehrere Rohrwendeln schraubengewindeartig entlang verlaufen. Im Übrigen ist das Behältervolumen mit Wasser als Wärmeträgermedium gefüllt. Die Anschlüsse der Rohrwendel sind aus dem Behälter heraus geführt. Durch die Rohrwendeln wird ebenfalls ein Wärmeträgermedium, üblicherweise Wasser, geführt.

Zufolge Wärmetausch zwischen den in den Rohrwendeln befindlichen Wärmeträgermedien und dem außen die Rohrwendeln umschließenden Wärmeträgermedium kommt es in dem Behälter zu Temperaturunterschieden, welche durch den Thermosiphoneffekt zu einer zirkulierenden Strömung des nicht in Rohrwendeln gehaltenen Wärmeträgermediums führen. Dabei sind auf- und abwärts führende Teilströme der Strömung durch das Leitrohr voneinander getrennt. Indem durch das Leitrohr definierte Strömungsverhältnisse geschaffen werden, kann der Wärmetausch an den Rohrwendeln als Gegenstrom-Wärmetausch stattfinden, womit Wärmeübertragung über einen hohen Temperaturbereich möglich ist.

Von diesem Stand der Technik ausgehend besteht die der Erfindung zu Grunde liegende Aufgabe darin, einen Wärmespeicher zur Verfügung zu stellen, welcher unter strenger Beachtung der Wirtschaftlichkeit und bei ansonsten vergleichbar guter Funktionalität gegenüber den genannten Bauweisen dahingehend verbessert ist, dass er auch bei einer Ausführung mit extrem großem Wärmespeichervolumen im Bedarfsfall von einem kühlen Zustand aus sehr rasch in einen Zustand übergeführt werden kann, in welchem er in ausreichender Menge heißes Brauchwasser bereitstellen kann.

Zum Lösen der Aufgabe wird von den bekannten Merkmalen ausgegangen, dass der Wärmespeicher einen mit Heizwasser gefüllten Behälter aufweist, dessen größere Abmessung vertikal ausgerichtet ist, dass im Inneren des Behälters ein zum Behältervolumen nach oben und nach unten hin offenes, im Wesentlichen vertikal ausgerichtetes Leitrohr angeordnet ist, in dessen Innenraum eine Rohrwendel verläuft, welche das zu erwärmende Brauchwasser führt, und dass eine elektrische Heizpatrone mit ihrer beheizbaren Oberfläche in das Innere des Leitrohres ragt.

Erfindungsgemäß ist vorgesehen, dass sich die elektrische Heizpatrone durch eine Öffnung in der Mantelfläche des Behälters und durch eine Öffnung in der Mantelfläche des Leitrohres hindurch erstreckt, wobei diese Öffnungen vom oberen und vom unteren Rand der jeweiligen Mantelfläche beabstandet ist.

In einer besonders bevorzugten Ausführungsform liegen die Öffnungen in den besagten Mantelflächen jeweils im mittleren Höhendrittel der Mantelflächen.

In einer weiteren besonders bevorzugten Ausführungsform erstreckt sich die Rohrwendel für das zu erwärmende Brauchwasser unterhalb und oberhalb über den Höhenbereich hinaus, in welchem sich die Heizpatrone befindet.

In einer dazu weiter bevorzugten Ausführungsform ist die Rohrwendel für das zu erwärmende Brauchwasser in dem unterhalb der Heizpatrone befindlichen Höhenbereich weniger dicht gewickelt als in dem oberhalb der Heizpatrone befindlichen Höhenbereich.

Die Erfindung wird an Hand einer Zeichnung veranschaulicht.
Fig. 1: zeigt als Prinzipskizze in vertikaler Teilschnittansicht einen beispielhaften erfindungsgemäßen Wärmespeicher.
Fig. 2: zeigt einen Innenbereich eines weiteren beispielhaften erfindungsgemäßen Wärmespeichers in Ansicht von oben.

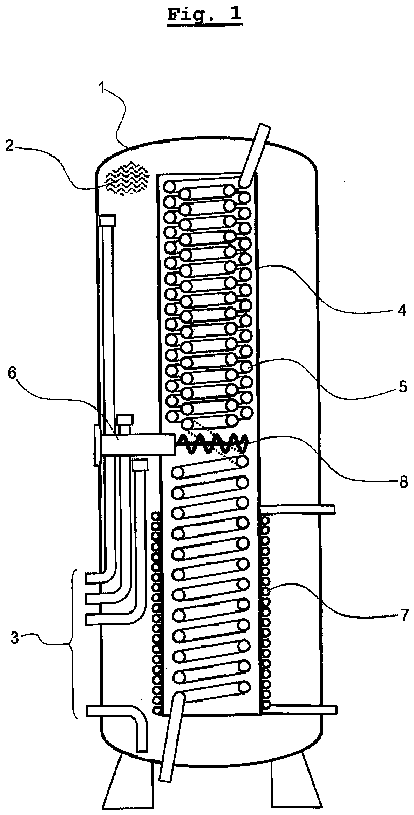

Die in Fig. 1 dargestellten wesentlichen Teile des beispielhaften erfindungsgemäßen Wärmespeichers sind ein Behälter 1, Heizwasser 2, Anschlüsse 3 für Zufluss und Abfluss von Heizwasser 2 in den Behälter 1, ein Leitrohr 4, eine Rohrwendel 5 für das Brauchwasser, eine elektrische Heizpatrone 6 und eine Rohrwendel 7 für ein zusätzliches Wärmeträgermedium wie z.B. Wasser eines solarthermischen Heizkreises. Nicht dargestellt ist eine zweifellos nützliche Wärmeisolierung, welche den Behälter 1 außen umgibt.

Das nicht durch feste Teile ausgefüllte Volumen im Inneren des Behälters 1 ist mit Heizwasser 2 gefüllt. Typischerweise ist der Behälter 1 dabei Teil eines primären Heizkreislaufes, welcher neben dem Behälter 1 auch einen Heizkessel (nicht dargestellt) umfasst.

Im Inneren des Behälters 1 ist das Leitrohr 4 angeordnet. Es ist von den Wänden des Behälters 1 beabstandet angeordnet, vertikal ausgerichtet und oben und unten zum Inneren des Behälters 1 hin offen. Typischerweise ist das Leitrohr 4 ein glattes festes Kunststoffrohr mit mehreren Dezimetern Durchmesser, wie es beispielsweise auch für Abwasserkanäle Anwendung findet.

In dem durch das Leitrohr 4 umfassten Volumen verläuft die Rohrwendel 5 für das zu erwärmende Brauchwasser. Das Rohr der Rohrwendel 5 sollte aus einem gut wärmeleitenden Material bestehen. Es führt innen das zu erwärmende Brauchwasser und es ist außen durch das Heizwasser 2 umströmt. Dadurch ist die Rohrwendel 5 der Wärmetauscher, in welchem Wärme vom Heizwasser 2 an das Brauchwasser übertragen wird.

Wenn die Oberfläche der Rohrwendel 5 für das Brauchwasser kälter ist als das umgebende Heizwasser 2 und dabei die elektrische Heizpatrone 6, deren beheizbare Oberfläche 8 sich in dem durch das Leitrohr 4 umfassten Volumen befindet, nicht heizt, so bildet sich im inneren des Behälters 1 eine Zirkulation des Heizwassers, welche im Inneren des Leitrohres 4 zu einer nach unten hin gerichteten Strömung führt und seitlich außerhalb des Leitrohres 4 zu einer nach oben gerichteten Strömung.

Das zu erwärmende Brauchwasser wird dabei im Gegenstrom erhitzt, indem es von unten her in die Rohrwendel 5 zugeführt und nach oben hin als heißes Brauchwasser entnommen wird. Das Heizwasser 2 kann dabei von einer externen Quelle erhitzt werden und über die Anschlüsse 3 in den bzw. aus dem Behälter 1 geführt werden. Zusätzlich oder alternativ kann Wärme an das Heizwasser 2 durch die zusätzlichen Rohrwendel 7 zugeführt werden, welche typischerweise Wasser aus einem solarthermischen Heizkreis oder einer Wärmepumpe führt. Indem die zusätzliche Rohrwendel 7 am unteren Teil der Außenmantelfläche des Leitrohres 4 angeordnet ist, kann sie schon bei relativ niedrigen Temperaturen ihres Wärmeträgermediums einen Heizbeitrag an das Heizwasser beisteuern und sie beschleunigt die oben beschriebene Zirkulation.

Für den Fall, dass zeitnah Bedarf an heißem Brauchwasser besteht, und dass das Heizwasser 2 auch im oberen Volumenbereich des Behälters 1 kälter ist als die Solltemperatur des zu entnehmenden heißen Brauchwassers, dient die elektrische Heizpatrone 6 als Heizquelle, durch welche eine besonders schnelle Heizwirkung auf das Brauchwasser erreichbar ist.

Die elektrische Heizpatrone 6 beheizt unmittelbar das im Inneren des Leitrohres 4 befindliche Heizwasser 2, welches zeitlich unmittelbar nach dem Kontakt mit der beheizbaren Oberfläche 8 der Heizpatrone 6 an die Rohrwendel 5 für Brauchwasser anströmt und an diese Wärme abgeben kann. Indem die elektrische Heizpatrone 6 in einem vom oberen und vom unteren Ende des Leitrohres 4 entfernt angeordneten Höhenbereich im Inneren des Leitrohres 4 heizt, strömt das durch sie erwärmte Heizwasser 2 unabhängig von der jeweils vorliegenden Zirkulationsrichtung des Heizwassers 2 zuerst an die Rohrwendel 5 für das zu erwärmende Brauchwasser, bevor es in den Bereich außerhalb des Leitrohres 4 strömen kann, in welchem keine Beheizung der Rohrwendel 5 erfolgen kann.

Wenn die Wärmeübertragung von der elektrischen Heizpatrone 6 auf das Heizwasser 2 gegenüber den sonstigen Wärmeeinbringungen in das Heizwasser 2 und gegenüber der Wärmeentnahme an der Rohrwendel 5 für das Brauchwasser überwiegt, so kommt die weiter oben beschriebene Zirkulation zum stillstand und dann in entgegengesetzter Richtung wieder in Gang. Das heißt, dass dann Heizwasser 2 im Inneren des Leitrohres 4 nach oben hin strömt. Nun ist es besonders vorteilhaft, wenn - wie dargestellt - die Rohrwendel 5 für zu erwärmendes Brauchwasser im Höhenbereich oberhalb der elektrischen Heizpatrone 6 einen größeren Anteil an Rohrlänge aufweist als in dem darunter liegenden Höhenbereich. Im dargestellten Beispiel wird dies erreicht, indem die Rohrwendel 5 im oberen Bereich zwei Lagen Wicklungen anstatt nur einer aufweist und zudem die Wicklungen in einem geringeren Höhenabstand zueinander angeordnet sind. Vor allem bei größeren Wärmespeichern kann es sinnvoll sein im oberen Bereich auch mehr als zwei Lagen von Wicklungen der Rohrwendel 5 vorzusehen.

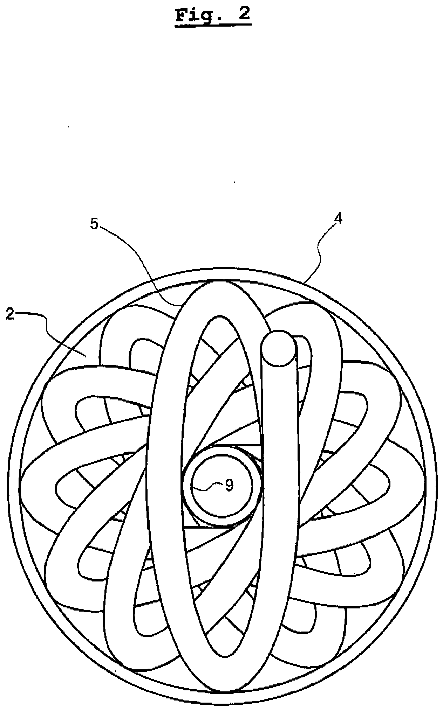

Als besonders vorteilhaft hat es sich erwiesen, die Rohrwendel 5 im Leitrohr 4 nicht aus im wesentlichen kreisförmigen einzelnen Wicklungen aufzubauen, sondern aus Wicklungen, welche eher elliptisch ist, sodass jede Wicklung sowohl achsnahe als achsferne Bereiche des Innenraums des Leitrohres 4 durchdringt. Als Veranschaulichung dazu dient Fig. 2. Koaxial mit dem Leitrohre 5 erstreckt sich entlang von dessen Achse ein dünnwandiges Stützrohr 9, um welches herum die Wicklungen der Rohrwendel 5 derart gewickelt sind, dass so gut wie keinen Volumenbereich in dem durch das Leitrohr 4 umfassten Volumen gibt, in welchem Heizwasser 2 ohne Umlenkung parallel zur Achse des Leitrohres durch dieses hindurchfließen kann.

Optional können mehr als nur eine einzige elektrische Heizpatrone 6 vorgesehen werden. Damit kann im Bedarfsfall mehr Heizleistung eingebracht werden und somit die Aufheizgeschwindigkeit noch weiter erhöht werden. Ggf. können die Heizpatronen in unterschiedlichen Höhen angebracht werden. Sofern dies nicht ohnedies flexibel einstellbar eingerichtet ist, sollte bei Vorhandensein einer lokalen Photovoltaik-Stromquelle die zuunterst angeordnete elektrische Heizpatrone für den Betrieb mit Photovoltaik-Strom vorgesehen sein. Auch die zusätzlichen Heizpatronen sind dabei bevorzugt so angeordnet, dass sie durch eine Öffnung in der Mantelfläche des Behälters (1) und durch eine Öffnung in der Mantelfläche des Leitrohres (4) hindurch ragen.

## Patentansprüche

1. Wärmespeicher mit einem Behälter (1), welcher mit Heizwasser (2) gefüllt ist, wobei im Inneren des Behälters (1) ein zum Behälterinnenraum nach oben und nach unten hin offenes, im Wesentlichen vertikal ausgerichtetes Leitrohr (4) angeordnet ist, in dessen Innenraum eine Rohrwendel (5) verläuft, welche das zu erwärmende Brauchwasser führt und wobei eine elektrische Heizpatrone (6) mit ihrer beheizbaren Oberfläche (8) in das Innere des Leitrohres ragt (4),
**dadurch gekennzeichnet, dass**
sich die elektrische Heizpatrone (6) durch eine Öffnung in der Mantelfläche des Behälters (1) und durch eine Öffnung in der Mantelfläche des Leitrohres (4) hindurch erstreckt, wobei diese Öffnungen vom oberen und vom unteren Rand der jeweiligen Mantelfläche beabstandet sind.

2. Wärmespeicher nach Anspruch 1, **dadurch gekennzeichnet, dass** die Öffnungen jeweils im mittleren Höhendrittel der jeweiligen Mantelfläche liegen.

3. Wärmespeicher nach Anspruch 1 oder 2, **dadurch gekennzeichnet, dass** sich die Rohrwendel (5) für das zu erwärmende Brauchwasser unterhalb und oberhalb über den Höhenbereich hinaus erstreckt, in welchem sich die Heizpatrone (6) befindet.

4. Wärmespeicher nach Anspruch 3, **dadurch gekennzeichnet, dass** die Rohrwendel (5) für das zu erwärmende Brauchwasser in dem oberhalb der Heizpatrone (6) befindlichen Höhenbereich dichter gewickelt ist als in dem unterhalb der Heizpatrone (6) befindlichen Höhenbereich.

5. Wärmespeicher nach einem der Ansprüche 1 bis 4, **dadurch gekennzeichnet, dass** sich in dem Behälter (1) unterhalb der Höhe der elektrischen Heizpatrone (6) eine weitere Rohrwendel (7), welche ein Wärmeträgermedium führt, außen um die Mantelfläche des Leitrohres (4) herum erstreckt.
